# EUROPEAN PATENT SPECIFICATION

(11) **EP 2 474 410 B1**
(45) Date of publication and mention of the grant of the patent: **11.05.2016**
(21) Application number: 11400001.1
(22) Date of filing: 05.01.2011
(51) Int. Cl.: B29C 73/10, B29C 70/54, B29B 11/16, B29C 70/38

(54) **Method of manufacturing a preform patch**
Verfahren zur Herstellung eines Vorformflickens
Procédé de fabrication d'une pièce de préforme

(43) Date of publication of application: 11.07.2012
(73) Proprietor: AIRBUS HELICOPTERS DEUTSCHLAND GmbH, 86609 Donauwörth (DE)
(72) Inventor: Weimer, Christian, 81543 München (DE); Dorn, Florian, 83623 Dietramszell (DE); Kaiser, Michael, 81547 München (DE); Gubernatis, Stefan, 80469 München (DE)
(74) Representative: Pouillot, Laurent Pierre Paul

(56) References cited:
- EP-A1- 1 923 192
- WO-A1-2009/080038
- US-A- 6 045 729
- US-A1- 2005 059 309
- US-A1- 2008 281 554
- US-A1- 2009 050 259

## Description

The present invention relates to a method of manufacturing a preform patch according to the preamble of claim 1 and particularly a method for repair of composite parts with a preform patch manufactured according to the preamble of claim 5.

Up to date composite rotor blades are repaired using repair patches manufactured by hand lay-up. E. g. from the document Åström, B.T. "Manufacturing of Polymer Composites", Chapman & Hall, 1997, pp341-342 it is known that in order to repair a composite part, damaged material is removed completely from the composite part by using a knife, grinding disk or a comparable device and any gelcoat present is removed. The laminate around the damaged area is tapered. Replacement material is cut to size and shaped and laminated in place. After crosslinking of the replacement material, the original laminate shape is restored by a machining step. A gelcoat is applied to finish the repair.

The document US 2010196705 A1 discloses a method of repairing a composite component having a damaged area including: laying a composite patch over the damaged area; activating the shape memory polymer resin to easily and quickly mold said patch to said damaged area; deactivating said shape memory polymer so that said composite patch retains the molded shape; and bonding said composite patch to said damaged part.

The document WO 2008057385 A1 discloses systems and methods for providing nondestructive inspection (NDI) services. Such a system for remote inspection includes a NDI system configured to examine a structure and provide NDI data related to a damage condition of the structure, the NDI system being configured to communicate the NDI data to a remote location; and a remote computer disposed at the remote location, the remote computer being configured to receive the NDI data and provide the received NDI data for a review, the remote computer being configured to communicate an analytical result based on the review to the NDI system, the analytical result including a repair disposition decision corresponding to the damage condition.

The document DE 102008051380 A1 discloses a method bringing a non-hardened fiber composite material to a position of fiber-reinforced plastic components. A vacuum foil is attached for hardening the fiber composite material. The fiber composite material is hardened by passing through several temperature levels. The fiber composite material is present in the form of fiber prepreg layers. The material is hardened continuously by vacuum and without use of positive pressure. The prepreg layers are rolled by the vacuum foil during the hardening through several temperature levels. This method of the state of the art implies a lot of manual work and is thus time consuming and expensive as - according to the known technology - layer by layer has to be applied in order to build up a multi-layer prepreg. Several compaction steps under vacuum are necessary to remove entrapped air in a certain amount of layers which is a time consuming process as the evacuation steps necessary to remove the entrapped air are less efficient since the application of the compression forces through the vacuum foil is less efficient than in an autoclave. This process requires a high amount of labour. The manual handling of large patch layers may induce material defects.

The document US 2008281554 A1 discloses a composite repair system and method for assisting in the repair of a cured composite part in which a damaged portion has been cut out and removed, exposing a plurality of composite plies and their corresponding composite ply edges. The composite repair system may comprise a light source to illuminate the ply edges, an image capturing device to obtain an image of the ply edges, and a computing device for processing the image of the ply edges and creating a map of the ply edges based on the image. The map may be used to manufacture filler plies having peripheral edges shaped to correspond with the composite ply edges for replacing the damaged portion of the composite part.

The document WO 2009 0800 38 A1 discloses the preamble of claim 1

It is an object of the present invention to provide for a cost and time-saving method for manufacturing of a preform patch and particularly a method for repair of composite parts with such a preform patch without the disadvantages of the state of the art.

The solution according to the present invention is provided with a cost and time-saving method for manufacturing of a preform patch according to the features of claim 1.

According to the invention a method of manufacturing a preform patch, particularly a method of manufacturing a repair preform patch for the repair of composite parts, is at least partly automated and comprises the following steps: Cutting of customized fabric plies, preferably with an automatic CNC-Cutter controlled with data from a common data pool, subsequently stacking of the fabric plies on a base material to a shaped patch, preferably stacking said fabric plies to a plurality of tapered patches, fixing of the at least one shaped patch of fabric plies on the base material by stitching, and infiltrating of the at least one shaped patch of fabric plies preferably in one shot to at least one preimpregnated preform patch, with infiltrating being used as synonym for impregnating. The use of the method according to the invention for an automated repair process for the manufacturing and infusion of repair patches provides savings in cost and time particularly if combined with automated subsequent curing. According to a first advantageous aspect of the invention cutting of customized fabric plies with an automatic CNC-Cutter results in precise and reproducible single fabric layers with the further advantage that the data used and provided by the automatic CNC-Cutter may be used for subsequent automated processing such as at least partly automated stacking of the fabric plies on a base material to a shaped patch and/or at least partly automated stitching of the at least one shaped patch of fabric plies onto a base material of ply peel. The stacking and fixation of one or more customized patches on a base material enables the use of standard tooling, standard processing and/or manufacturing programs. Additionally, if various patches are fixed on the base material to form a patch field, the one-shot impregnation of said various patches with the so called preform prepreg method is possible at a time. The use of peel ply as base material allows easy separation of the base material from the patch, particularly after curing. If several repair patches are fixed on the base material and possibly impregnated in a one-shot process, the patches can be separated from each other advantageously with a scissor or cutter prior to application on the repair spot. According to a further advantageous aspect of the invention any handling, such as cutting, stacking and/or infiltrating/impregnating of patches of fabric layers reduces the required time and amount of labour for the wet layup process and is less critical than the handling of single fabric layers said advantage being particularly important in connection with automated processing providing high reproducibility, low tooling less auxiliary material and preparation effort and less induced material harm. Hence the inventive method allows solving the following problems of the state of the art:
a. Application of time consuming, manual process steps,
b. Inefficiency of process due to impregnation of single plies at a time,
c. Inefficiency of process due to fabrication of single patches at a time, and
d. Risk of material damage during manual handling.

The method according to the invention allows improved efficiency within automated repair processes of composite parts such as rotor blades but said inventive method is also suitable for automated patch fabrication and/or for other fibre reinforced plastic structures, such as used in helicopter structures and/or aircraft doors as former time consuming manual process steps can be replaced by automated process steps. The integration of any step of the inventive method of manufacturing a preform patch, such as the infiltration or impregnation of any multi-layered preform in one step in contrast to the ply-by-ply infiltration/impregnation of the wet layup method of the state of the art and/or the application of the automated pick & place step of the inventive method that reduces the risk of material damage during handling, into a complete repair process with the use of data from a common data pool even further enhances the efficiency of the inventive method.

According to a preferred embodiment of the invention the stacking of the fabric plies is effected by means of automated pick & place, preferably with a robot guided end effector for picking any ply from the CNC-cutter, transporting and positioning the ply according to a stacking sequence provided by the common data pool. The application of an automated handling process for "pick & place" is reproducible and enables areal force introduction in contrast to the state of the art with local force introduction by manual work.

According to a further preferred embodiment of the invention fixing of the patch shaped fabric plies on the base material with standardised stitch pattern, preferably with parallel oriented seams comprises a continuous stitching process over the boundaries of a patch and if such continuous stitching process over the boundaries of a patch is not possible, due to an incompatibility of the base material, a stitching pattern is adopted to the patch shape by deleting the parts of the seams outside the patch such that interconnection of a plurality of customized patches is an inherent optional result of the stitching process.

According to the invention an at least partiy automated method for repair of composite parts with a preform patch is provided with the following steps: Building a sealed in housing around a location of repair, Applying resin on a tool or to the location of repair, Arranging the preform patch onto the location of the applied resin, Building of a vacuum setup to the sealed in housing and removing the air to create a vacuum in the sealed in housing, and Heating the preform patch to partly or fully cure the preform patch.

According to a further preferred embodiment of the invention any base material still attached to the preimpregnated preforms is used for distribution of the resin and/or the vacuum in the sealed in housing around the location of repair.

A preferred embodiment of the invention is presented by means of the following description with reference to the attached drawing, from which

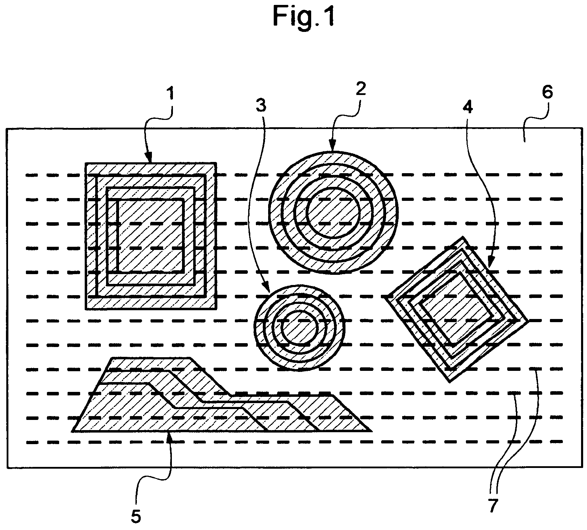

Fig. 1 shows a patch field for the method of manufacturing a preform patch according to the invention.

According to Fig. 1 a plurality of single dry fabric layers of different shapes, such as a rectangle 1, circles of different diameters 2, 3, a parallelogram 4 or a polygon 5 are cut automatically on a CNC-cutter (not shown) to customized dry fabric layers of standard shape and size, made of a peel ply. The specific shapes of each of said customized dry fabric layers 1 - 5 are generated from digital input provided at an early stage of any repair process by any integrated repair systems featuring the use of NDI (non destructive inspection) data retrieved by scanning a repair spot surface of a composite part in order to provide the geometry data needed for the repair. Said geometry data is stored at a common data pool (not shown) to control the CNC-cutter.

Each of the commonly shaped, customized single dry fabric layers 1 - 5 are picked one by one respectively by an automatic pick and place means (not shown), such as a robot guided robot head conceived to pick any of the customized fabric layers 1 - 5 from the CNC-cutter, in order to transport each of it to a base material 6 of peel ply to stack the commonly shaped, customized single dry fabric layers 1 - 5 to a patch. A mesh of vacuum grippers (not shown), preferably special grippers with high volume flow and a grid for material support are used as picking means. Single grippers are activated or deactivated according to the respective size of each fabric layer to place each of said fabric layers in its respective defined position on the base material 6 for subsequent stitching with a stitching tool (not shown). The stacking sequence for the single dry fabric layers 1 - 5 is provided to the robot by data from said common data pool.

The base material 6 of peel ply is deposited continuously on a conveyor belt (not shown) of an automated depositing station (not shown) and the cut dry fabric plies 1 - 5 are stacked to patches on the base material 6 by the automated pick and place means. The base material 6 with the patches is transported into the stitching tool by the conveyor belt and next patches can be placed on the base material.

Each of the stacked fabric layers 1 - 5 are fixed to the base material 6 by automatic stitching with a 2D stitching portal or a stitching robot head (not shown) allowing stitching patterns of different sizes of patches on the peel ply 6 with seams 7 oriented parallel, in the length direction of for example a rotor blade (not shown) from root to tip, to allow bending of the patch in the requested magnitude without tucking. Standard stitching programs are stored and available for the stitching tool in the common data pool for each patch or variety of patches according to the required sizes.

The conveyor belt transports the base material with the patches of cut dry fabric plies 1 - 5 into the stitching portal. Once the base material 6 is stopped the patches of cut dry fabric plies 1 - 5 are stitched in the desired pattern or - in case fixed stitching machines are applied - any parallel stitching patterns are stitched during the movement of the conveyor belt and fixation of the patches of cut dry fabric plies 1 - 5 to the base material 6 is provided directly at the stitching foot. After stitching, the patches with the fixed layers or the fields of patches with the fixed layers are transported out of the portal and separated.

Alternatively if a continuous stitching process over the boundaries of a patch 1 - 5 is not possible, due to an incompatibility, the stitching pattern is adopted to the patch shape by deleting the parts of the seams 7 outside the patch 1 - 5. Interconnection of a plurality of customized patches 1 - 5 is an inherent optional result of the stitching process.

The infiltration of the dry patches 1 - 5 to a preimpregnated preform in case of use for repair can be effected at the location of repair, using resin film infusion (RFI), vacuum assisted resin infusion (VARI) or any vacuum assisted process (VAP). If applicable any interconnected patches 1 - 5, forming a patch field, have to be separated prior to an infiltration at the location of repair.

Alternatively infiltration of one or more patches 1 - 5 at a time before an application on a location of repair is performed automatically by a so called preform-prepreg process. For this purpose a sealed in housing (not shown) is built around the location of repair (not shown) on for example a rotor blade. The necessary amount of resin is deposited on a tool (not shown) or in the location of repair inside the sealed in housing. The preform is placed on the resin and - if applicable - the tool in the location of repair inside the sealed in housing. A vacuum setup is built around the sealed in housing and vacuum is applied to the inside of the sealed in housing encompassing the preform in order to convey the resin towards and/or into the preform for subsequent impregnation. The preform may be heated and will be partly or fully cured. Any base material 6 still attached to the preimpregnated preform may be used to direct the flow of the resin or the vacuum distribution within the sealed in housing around the repair area, particularly in case of a preform patch field.

Alternatively, one-shot infiltration of the complete preform patch field at the repair area can be performed with any of the state-of-the-art methods.

## Claims

1. A method for repair of composite parts by automated processing with a preform patch according to the following steps:
a. Scanning a repair spot surface of a composite part,
b. Providing non destructive inspection data from said scan to a common data pool,
c. Cutting of customized fabric plies (1 - 5), preferably with an automatic CNC-Cutter controlled with data from the common data pool, **characterised by** the following steps
d. Stacking of the fabric plies (1 - 5) to the shaped patch, preferably stacking said fabric plies (1 - 5) to a plurality of tapered patches, on a base material (6) preferably made of peel ply,
e. Fixing of the at least one shaped patch of fabric plies (1 - 5) on the base material (6) by stitching,
f. Infiltrating of the at least one shaped patch of fabric plies (1 - 5) in preferably one shot to the at least one preform patch,
g. Building a sealed in housing around the repair spot surface or on a tool,
h. Applying resin on the tool or in the location of repair by using an infiltration or infusion method,
i. Arranging the preform patch onto the tool or in the location of repair, prior or after the application of the resin,
j. Building of a vacuum setup to the sealed in housing and removing the air to create a vacuum in the sealed in housing, and
k. Heating the preform patch to cure partly or fully.

2. The method according to claim 1,
**characterized by** stacking by means of automated pick & place, preferably with a robot guided robot head for picking any ply from the CNC-cutter, transporting and positioning the patches of fabric plies (1 - 5) according to a stacking sequence provided by the common data pool.

3. The method according to claim 1,
**characterized by** fixing of the patch of shaped fabric plies (1 - 5) on the base material (6) with standardized stitch pattern, preferably with parallel oriented seams (7).

4. The method according to claim 1,
**characterized by** separating the patches of fabric plies (1 - 5), if more than one patch is arranged on the base material (6).

5. The method according to claim 1.
**characterized by** using the base material (6) for distribution of the resin and/or the vacuum.

## Patentansprüche

1. Verfahren zum Reparieren von Teilen aus Verbundwerkstoff durch automatisierte Bearbeitung mit einem Vorform-Flicken mit folgenden Schritten:
a. Scannen einer Reparaturstellenoberfläche eines Teils aus Verbundwerkstoff,
b. Liefern von Daten der zerstörungsfreien Untersuchung aus dem Scan an einen gemeinsamen Datenpool,
c. Ausschneiden von maßgefertigten Gewebelagen (1-5), vorzugsweise mit einer automatischen CNC-Schneidemaschine, die mit Daten aus dem gemeinsamen Datenpool gesteuert wird, **gekennzeichnet durch** die folgenden Schritte:
d. Stapeln der Gewebelagen (1-5) zu dem geformten Flicken, vorzugsweise Stapeln der Gewebelagen (1-5) zu einer Mehrzahl von abgeschrägten Flicken auf einem Grundmaterial (6), vorzugsweise aus Abreißgewebe,
e. Befestigen des mindestens einen geformten Flickens aus Gewebelagen (1-5) auf dem Grundmaterial (6) **durch** Heften,
f. Einführen des mindestens einen geformten Flickens aus Gewebelagen (1-5), vorzugsweise in einem Vorgang, in den mindestens einen Vorform-Flicken,
g. Ausbilden eines abgedichteten Gehäuses um die Reparaturstellenoberfläche oder auf einem Werkzeug,
h. Aufbringen von Harz auf das Werkzeug oder die Reparaturstelle durch Anwenden eines Infiltrierungs- oder Infusionsverfahrens,
i. Anordnen des Vorform-Flickens auf dem Werkzeug oder der Reparaturstelle vor oder nach dem Ausbringen des Harzes,
j. Herstellen einer Unterdruckanlage am abgedichteten Gehäuse und Entfernen der Luft zur Erzeugung eines Unterdrucks in dem abgedichteten Gehäuse, und
k. Aufheizen des Vorform-Flickens, um diesen teilweise oder ganz auszuhärten.

2. Verfahren nach Anspruch 1,
**gekennzeichnet durch** Stapeln **durch** automatisches Bestücken, vorzugsweise mit einem robotergeführten Roboterkopf zum Auf nehmen einer jeden Gewebelage von der CNC-Schneidemaschine, Transportieren und Positionieren der Flicken aus Gewebelagen (1-5) gemäß einer von dem gemeinsamen Datenpool ausgegebenen Stapelsequenz.

3. Verfahren nach Anspruch 1,
**gekennzeichnet durch** Befestigen des Flickens aus geformten Gewebelagen (1-5) auf dem Grundmaterial (6) mit standardisierten Heftmustern, vorzugsweise mit parallel ausgerichteten Nähten (7).

4. Verfahren nach Anspruch 1,
**gekennzeichnet durch** Trennen der Flicken aus Gewebelagen (1-5), wenn mehr als ein Flicken auf dem Grundmaterial (6) anbeordnet ist.

5. Verfahren nach Anspruch 1,
**gekennzeichnet durch** Verwenden des Grundmaterials (6) zur Verteilung des Harzes und/oder des Unterdrucks.

## Revendications

1. Méthode de réparation de pièces en composite par procédé automatisé avec un élément de rapiéçage préformé, suivant les étapes suivantes :
a. Analyser une surface d'une localisation de réparation sur une pièce en composite,
b. Fournir des données de contrôle non destructif à partir de ladite analyse à une base de données centralisée,
c. Découper sur mesure des nappes textiles (1 - 5), de préférence avec une découpeuse automatique à commande numérique commandée à partir de données provenant de la base de données centralisée, **caractérisée par** les étapes suivantes
d. Empiler les nappes textiles (1 - 5) pour obtenir l'élément de rapiéçage préformé, de préférence en empilant lesdites nappes textiles (1 - 5) pour obtenir plusieurs éléments de rapiéçage en biseau, sur un matériau de base (6) de préférence en forme de nappe d'arrachage,
e. Fixer l'au moins un élément de rapiéçage préformé en nappes textiles (1 - 5) par couture sur le matériau de base (6),
f. Effectuer l'infiltration de l'au moins un élément de rapiéçage préformé en nappes textiles (1 - 5) de préférence en une seule opération dans l'élément de rapiéçage préformé,
g. Réaliser une étanchéité de réception autour de la surface de la localisation de réparation ou sur un outil,
h. Appliquer une résine sur l'outil ou dans la localisation de réparation suivant un procédé d'infiltration ou d'infusion,
i. Mettre en place l'élément de rapiéçage préformé sur l'outil ou dans la localisation de réparation, avant ou après l'application de la résine,
j. Réaliser une mise en dépression de l'étanchéité de réception et une évacuation de l'air pour créer un vide dans l'étanchéité de réception, et
k. Chauffer l'élément de rapiéçage préformé pour un durcissement partiel ou total.

2. Méthode selon la revendication 1,
**caractérisée par** un empilement au moyen d'un prélèvement et mise en place automatisés, de préférence à l'aide d'une tête robotisée d'automate piloté, pour prélever toute nappe depuis la découpeuse à commande numérique, la transporter et mettre en place des éléments de rapiéçage préformés en nappes textiles (1 - 5) suivant une séquence d'empilement définie par la base de données centralisée.

3. Méthode selon la revendication 1,
**caractérisée par** la fixation des éléments de rapiéçage préformés en nappes textiles (1 - 5) sur le matériau de base (6) suivant un motif de couture normalisé, de préférence avec des coutures orientées parallèlement (7).

4. Méthode selon la revendication 1,
**caractérisée par** la séparation des éléments de rapiéçage préformés en nappes textiles (1-5), si plus d'un seul élément de rapiéçage préformé est mis en place sur le matériau de base (6).

5. selon la revendication 1,
**caractérisée par** l'utilisation du matériau de base (6) pour répartir la résine et/ou le vide.
